# EUROPÄISCHE PATENTSCHRIFT

(11) **EP 3 561 358 B1**
(45) Veröffentlichungstag und Bekanntmachung des Hinweises auf die Patenterteilung: **11.11.2020**
(21) Anmeldenummer: 18169967.9
(22) Anmeldetag: 27.04.2018
(51) Int. Cl.: F16L 19/10

(54) **VERSTÄRKUNGSHÜLSE, SCHNEIDRINGVERSCHRAUBUNG UND VERFAHREN**
REINFORCING SLEEVE, CUTTING RING SCREW CONNECTION AND METHOD
MANCHON DE RENFORT, VISSAGES À BAGUE COUPANTE ET PROCÉDÉ

(43) Veröffentlichungstag der Anmeldung: 30.10.2019
(73) Patentinhaber: WALTER STAUFFENBERG GMBH & CO. KG, 58791 Werdohl (DE)
(72) Erfinder: König, Ulrich Stefan, 58849 Herscheid (DE); Aul, Alexander, 59423 Unna (DE); Bernikov, Sergej, 58511 Lüdenscheid (DE)
(74) Vertreter: Patentanwälte Dörner & Kötter PartG mbB

(56) Entgegenhaltungen:
- EP-A2- 2 453 156
- DE-A1- 2 833 587
- JP-A- H05 180 380
- US-A- 2 566 769

## Beschreibung

Die Erfindung betrifft eine Verstärkungshülse für eine Schneidringverschraubung für ein dünnwandiges Rohr nach dem Patentanspruch 1. Die Erfindung betrifft weiterhin eine Schneidringverschraubung für ein dünnwandiges Rohr nach dem Patentanspruch 4, ein Rohr mit einer solchen Schneidringverschraubung nach dem Patentanspruch 6 sowie ein Verfahren zur Montage einer Schneidringverschraubung nach dem Patentanspruch 7.

Schneidringverschraubungen werden insbesondere im Bereich der Hydraulik eingesetzt und ermöglichen das Verschrauben von Rohren mit Anschlusskörpern. Hierzu wird eine insbesondere metallische Rohrleitung an einen eine Aufnahmeöffnung für die Rohrleitung aufweisenden Anschlusskörper angeschlossen. Der Anschlusskörper weist ein Außengewinde zum Aufschrauben einer Überwurfmutter auf. Zwischen dem Anschlusskörper und der Überwurfmutter wird ein Schneidring angeordnet. Beim Anzug der Überwurfmutter wird der mit einer Schneidkante versehene Schneidring in den Innenkegel des Anschlusskörpers gepresst. Hierbei verjüngt sich der Schneidring an seinem vorderen Teil und schneidet sich in den Mantel des Rohrendes ein. Das dabei aufgeworfene Material bildet vor der Schneidkante einen Bund, der bewirkt, dass das Rohrende fest und dicht in dem Anschlusskörper gehalten ist.

Problematisch für derartige Schneidring Verschraubungen sind insbesondere dünnwandige Metallrohre oder auch Kunststoffrohre, da diese sich bei der Einwirkung der beim Aufschrauben der Überwurfmutter auf den Anschlusskörper auftretenden Kräfte verformen können. Um einer solchen Verformung entgegenzuwirken, wird üblicherweise eine Verstärkungshülse zur Stabilisierung der Verbindungsstelle eingesetzt, wie dies beispielsweise in der DE 91 14 824 U1, US 2,566,769 A, DE 2833587 A1 sowie der JPH05180380 A angeführt ist. Diese Verfahrensweise hat sich seit Jahrzehnten bewährt. Gleichwohl gestaltet sich besonders bei solchen Schneidringverschraubungen, bei denen dünnwandige Metallrohre unter Einsatz solcher Verstärkungshülsen angeordnet werden, die Erzielung der erforderlichen Verbindungsgüte problematisch.

Hier setzt die vorliegende Erfindung an. Der Erfindung liegt die Aufgabe zugrunde, eine Schneidringverschraubung insbesondere für dünnwandige Metallrohre sowie auch Kunststoffrohre sowie eine Verstärkungshülse hierfür bereitzustellen, deren Zuverlässigkeit verbessert ist. Gemäß der Erfindung wird diese Aufgabe durch eine Verstärkungshülse mit den Merkmalen des Patentanspruchs 1 sowie durch eine Schneidringverschraubung mit den Merkmalen des Patentanspruchs 4 gelöst.

Mit der Erfindung ist eine Schneidringverschraubung für dünnwandige Metallrohre sowie auch Rohre aus Kunststoff sowie eine Verstärkungshülse hierfür bereitgestellt, deren Zuverlässigkeit verbessert ist. Überraschend wurde gefunden, dass sich die Erzielung der erforderlichen Verbindungsgüte besonders bei solchen Schneidringverschraubungen problematisch gestaltet, wo Rohre zum Einsatz kommen, bei denen die gegenüber dem Nenn-Innendurchmesser zulässigen Toleranzwerte größtenteils ausgenutzt wurden. Die Rohre werden nach DIN EN 10217-7 in der aktuellen Ausgabe 01-2015 gefertigt. Vorliegend ist hier insbesondere die Toleranzklasse D3/T3 im Durchmesserbereich (Außendurchmesser) 6-42 mm beachtlich. Die Toleranzklasse referenziert hierbei auf EN ISO 2217. Daraus ergeben sich zulässige Abweichungen des Außendurchmessers (D3) von +/- 0,3 mm oder +/- 0,75% sowie zulässige Abweichungen der Wandstärke (T3) von +/- 0,2 mm oder +/- 10%, wobei jeweils der höhere Wert zulässig ist.

Es wurde hierbei gefunden, dass es durch vorhandene Toleranzen zu ungewollten Abständen zwischen der Außenmantelfläche der Verstärkungshülse und der Innenmantelfläche des Rohres kommt, wodurch die Verbindungsgüte zwischen Schneidring und Rohr negativ beeinträchtigt ist.

Die erfindungsgemäße Verstärkungshülse weist einen Hülsenkörper auf, der endseitig mit einem zumindest bereichsweise umlaufenden Kragen versehen ist und der über seine gesamte Länge durch einen axialen Schlitz durchtrennt ist. Dabei ist der Hülsenkörper derart elastisch ausgebildet, dass die Kanten des axialen Schlitzes reversibel aneinanderdrückbar sind. Hierbei errechnet sich die Breite des axialen Schlitzes zu b_{Schlitz} = D_{Hülse} •3 % • π, mit D_{Hülse} = Außendurchmesser der Verstärkungshülse. Dabei ist die Verstärkungshülse vorteilhaft aus Messing oder Federstahl hergestellt.

Eine solche Verstärkungshülse wird bei der erfindungsgemäßen Schneidringverschraubung eingesetzt. Dabei hat die Verstärkungshülse einen größeren Außendurchmesser, als der Rohrinnendurchmesser. Durch den Schlitz ist die Verstärkungshülse in der Lage, Toleranzen innerhalb des Rohrinnendurchmessers auszugleichen. Durch den Schlitz kann die Hülse in ihrem Außendurchmesser soweit reduziert werden, dass sie unter Vorspannung in das Rohr eingebracht werden kann, wonach sich die Hülse bedingt durch diese Vorspannung an die Innenmantelfläche des Rohres anlegt. Eine optimale, gleichmäßige Vorspannung über die Außenmantelfläche der Verstärkungshülse wird dadurch erzielt, dass der axiale Schlitz über die gesamte Länge der Verstärkungshülse verläuft. Der axiale Schlitz kann sowohl gerade Begrenzungskanten, als auch wellige, gezackte, gebogene, trapezförmige oder sonstige geeignete Begrenzungskanten aufweisen. Vorzugsweise weisen die Begrenzungskanten einen im Wesentlichen konstanten Abstand zueinander auf, sodass eine gleichmäßige Schlitzbreite erzielt ist.

Es hat sich gezeigt, dass eine Vorspannung der Verstärkungshülse von drei Prozent ausreicht, um Innendurchmesser-Toleranzen eines eingesetzten dünnwandigen Rohres auszugleichen. Daher beträgt der Außendurchmesser D_{Hülse} der Verstärkungshülse bevorzugt 1,03 • d_{i,Nenn}, mit d_{i,Nenn} = Nenn-Rohrinnendurchmesser.

Die Breite des axialen Schlitzes b_{Schlitz} der Verstärkungshülse errechnet sich zu b_{Schlitz} = D_{Hülse} • 3 % • π. Hierdurch ist eine hinreichende Vorspannung zum Ausgleich von Rohrinnendurchmessertoleranzen bei gleichzeitig maximaler Stabilität erzielt. Unter der maximalen Toleranz des Nenn-Innendurchmesser des Rohres wird an dieser Stelle der Abstand zwischen einem Nenn-Innendurchmesser mit maximaler Plus-Toleranz und mit maximaler Minustoleranz verstanden.

Die Verstärkungshülse ist endseitig mit einem zumindest bereichsweise umlaufenden Kragen zur Anlage an einer Stirnseite des Rohres versehen. Hierdurch ist eine gleichmäßige axiale Positionierung der Verstärkungshülse in dem Rohr erzielt.

In weiterer Ausgestaltung der Erfindung weist die Verstärkungshülse an einem Ende einen konusförmigen Endabschnitt auf. Hierdurch ist das Einführen der Verstärkungshülse in das Rohrende erleichtert. Bevorzugt ist die Verstärkungshülse aus Messing oder Federstahl hergestellt. Bei einer Ausführung aus Federstahl sollte dieser wärmebehandelt sein, um die Vorspannkraft zu erhöhen.

Gegenstand der vorliegenden Erfindung ist weiterhin ein Rohr mit einer Schneidringverschraubung der vorgenannten Art mit den Merkmalen des Patentanspruchs 6. In das Rohr ist eine einen axialen Schlitz aufweisende Verstärkungshülse eingebracht, die unter Vorspannung an der Innenwand des Rohres anliegt. Hierdurch sind Toleranzen innerhalb des Innendurchmessers des Rohres ausgeglichen, wodurch auf das Rohr im Bereich der Verbindungsstelle einwirkende Kräfte gleichmäßig von der Verstärkungshülse aufgenommen werden. Dabei errechnet sich die Breite des axialen Schlitzes zu b_{Schlitz} = D_{Hülse} • 3 % • π, mit D_{Hülse} = Außendurchmesser der Verstärkungshülse.

Der Erfindung liegt weiterhin die Aufgabe zugrunde, ein Verfahren zur Montage einer Schneidringverschraubung an einem dünnwandigen Rohr bereitzustellen, das eine zuverlässige Verbindung des Rohres mit einem Anschlusskörper ermöglicht. Gemäß der Erfindung wird diese Aufgabe durch ein Verfahren mit den Merkmalen des Patentanspruchs 7 gelöst. Erfindungswesentlich hierbei ist, dass zunächst stirnseitig eine einen zumindest bereichsweise umlaufenden Kragen aufweisende, axial geschlitzte Verstärkungshülse, deren Außendurchmesser größer als der Rohrinnendurchmesser ist, zusammengedrückt wird und nachfolgend die so vorgespannte außendurchmesserverminderte Verstärkungshülse in das Rohr eingesetzt wird, bis die Stirnseite des Rohres an dem Kragen der Verstärkungshülse anliegt, wonach die Verstärkungshülse entspannt wird, bis deren Außenmantelfläche an der Innenwand des Rohres anliegt. Hierdurch werden Toleranzen innerhalb des Innendurchmessers des Rohres durch die Verstärkungshülse ausgeglichen. Eine gleichmäßige Verstärkung des Rohres im gesamten Verbindungsbereich ist so ermöglicht.

Dabei errechnet sich die Breite b_{Schlitz} des axialen Schlitzes der Verstärkungshülse zu b_{Schlitz} = D_{Hülse} • 3 % • π, mit D_{Hülse} = Außendurchmesser der Verstärkungshülse. Hierdurch ist eine maximale Stabilität der vorgespannt an der Innenwand des Rohres anliegenden Verstärkungshülse erzielt. Vorteilhaft wird dabei die axial geschlitzte Verstärkungshülse vor dem Einsetzen in das Rohr soweit zusammengedrückt, bis die Kanten des axialen Schlitzes aneinanderliegen.

Andere Weiterbildungen und Ausgestaltungen der Erfindung sind in den übrigen Unteransprüchen angegeben. Ein Ausführungsbeispiel der Erfindung ist in den Zeichnungen dargestellt wird nachfolgend im Einzelnen beschrieben. Es zeigen:

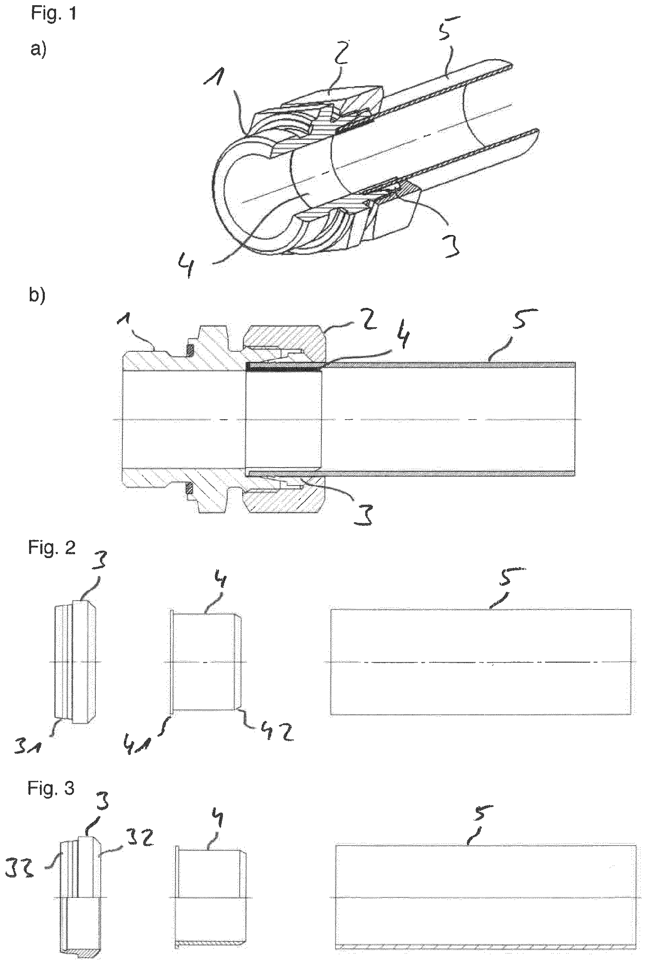

- Figur 1: die schematische Darstellung eines mit einer Schneidringverschraubung versehenen dünnwandigen Rohres
a) im Teilschnitt;
b) im Längsschnitt;
- Figur 2: die Darstellung des Rohres mit Schneidmutter und Verstärkungshülse aus Figur 1 in Explosionsdarstellung;

- Figur 3: die Darstellung der Anordnung aus Figur 2 im Teilschnitt;

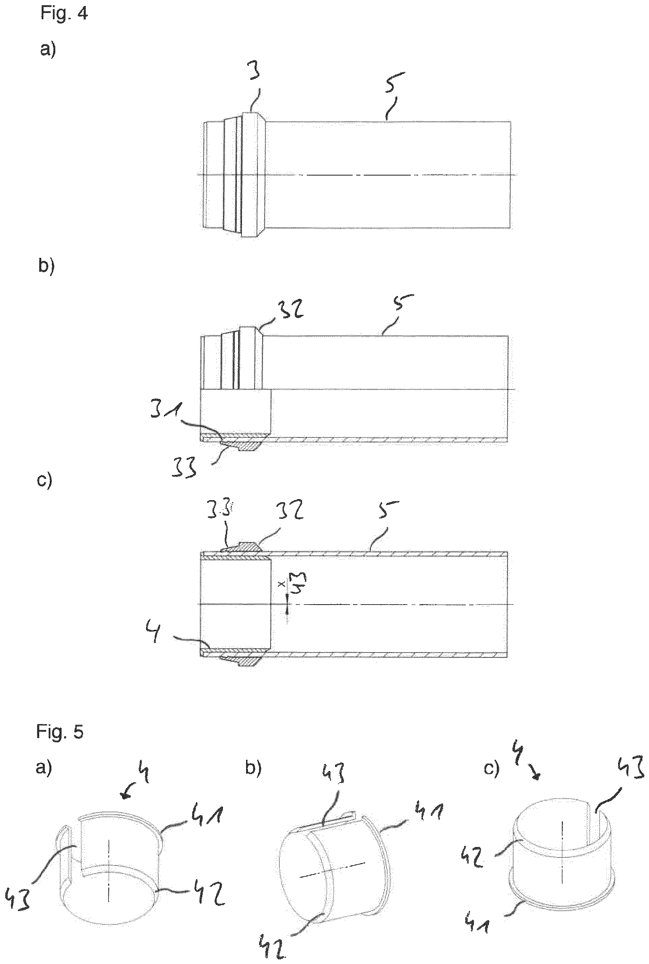

- Figur 4: die Darstellung des Rohrabschnitts mit Schneidring und Verstärkungshülse der Schneidringverschraubung aus Figur 1 (montiert)
a) in der Seitenansicht;
b) im Teilschnitt;
c) im Längsschnitt;
- Figur 5: die Detaildarstellung der Verschraubungshülse der Schneidringverschraubung gemäß Figur 1
a) in einer ersten räumlichen Ansicht;
b) in einer zweiten räumlichen Ansicht;
c) in einer dritten räumlichen Ansicht.

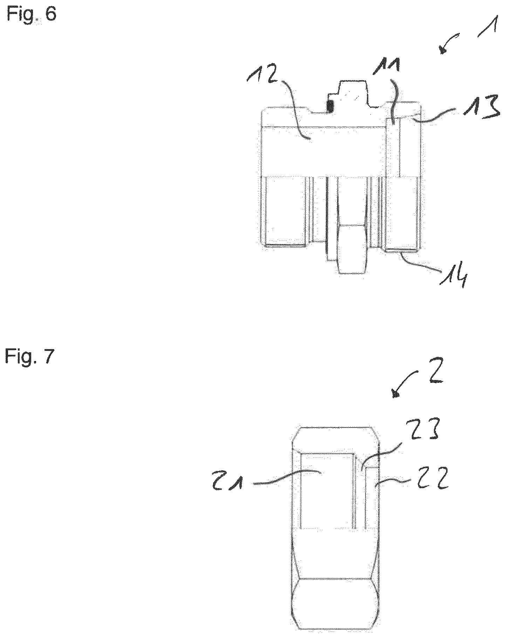

- Figur 6: die schematische Darstellung des Anschlusskörpers der Schneidringverschraubung aus Figur 1 und
- Figur 7: die schematische Darstellung der Überwurfmutter der Schneidringverschraubung aus Figur 1.

Die als Ausführungsbeispiel gewählte Schneidringverschraubung für ein dünnwandiges Rohr 5 umfasst einen Anschlusskörper 1, eine auf diesen aufschraubbare Überwurfmutter 2 und einen zwischen Anschlusskörper 1 und Überwurfmutter 2 angeordneten Schneidring 3, sowie eine Verstärkungshülse 4 zur Verstärkung des Rohres 5 im Verbindungsbereich. Das Rohr 5 ist im Ausführungsbeispiel ein geschweißtes Edelstahlrohr mit einem Nenn-Innendurchmesser von 32 mm und einer Wandstärke von 1,5 mm.

Der Anschlusskörper 1 weist in bekannter Art und Weise eine erste zylindrische Bohrung 11 auf, deren Innendurchmesser dem Außendurchmesser des aufzunehmenden Rohres 5 entspricht. An die erste Bohrung 11 schließt sich eine zweite Bohrung 12 mit kleinerem Durchmesser an, der im Wesentlichen dem Innendurchmesser des Rohres 5 entspricht. Im Übergang zwischen der ersten Bohrung 11 und der zweiten Bohrung 12 ist ein Absatz zur Anlage der Stirnfläche des Rohres 5 gebildet. An ihrer der zweiten Bohrung 12 entgegengesetzten Seite geht die erste Bohrung 11 in eine kegelige Bohrung über, die einen Klemmkonus 13 ausbildet. Der ersten Bohrung 11 gegenüberliegend weist der Anschlusskörper 1 außen weiterhin ein Außengewinde 14 zum Aufschrauben der Überwurfmutter 2 auf.

Die Überwurfmutter 2 weist im Anschluss an ihr Innengewinde 21 einen radial nach innen gerichteten Kragen 22 auf, dessen Innendurchmesser im Wesentlichen dem Außendurchmesser des Rohres 5 entspricht. Dabei weist der Kragen 22 im Übergangsbereich zum Innengewinde 21 einen konusförmigen Abschnitt 23 auf.

Der Schneidring 3 weist zwei radial umlaufende Schneiden 31 auf, die jeweils radial in Richtung der Außenfläche eines aufgenommenen Rohres 5 gerichtet sind. Der Schneidring 3 weist an einem Ende außen einen ersten Konus 32 zur Anlage an den konusförmigen Abschnitt 23 der Überwurfmutter 2 auf. An seiner dem ersten Konus 32 gegenüberliegenden Seite weist der Schneidring 3 einen zweiten Konus 33 zur Anlage an den Klemmkonus 13 des Anschlusskörpers 1 auf, der sich in der zum ersten Konus 32 entgegengesetzten Richtung wiederum nach außen verjüngt.

Die Verstärkungshülse 4 ist zylindrisch ausgebildet und weist einen Außendurchmesser von 33,9 mm auf. An einem Ende ist an die Verstärkungshülse 4 umlaufend ein radial nach außen kragender Kragen angeformt, dessen Breite im Wesentlichen der Wandstärke des Rohres 5 von 1,5 mm entspricht. An ihrer dem Kragen 41 gegenüberliegenden Seite weist die Verstärkungshülse 4 einen konusförmigen Endabschnitt 42 auf. Über ihre gesamte Länge ist die Verstärkungshülse 4 weiterhin mit einem axialen Schlitz 43 versehen. Im Ausführungsbeispiel weist der axiale Schlitz 43 eine Breite von 3 mm auf.

Zur Montage der Schneidringverschraubung wird zunächst die axial geschlitzte Verstärkungshülse 4 zusammengedrückt, bis die Kanten des axialen Schlitzes 43 aneinanderliegen und derart vorgespannt in das Rohr 5 eingesteckt, bis dieses an dem Kragen 41 der Verstärkungshülse 4 anliegt, welche sich innerhalb des Rohres 5 entspannt, so dass sie umlaufend durch die Vorspannkraft an der Innenwand des Rohres 5 anliegt. Vorhandene Innendurchmesser-Toleranzen des Rohres werden hierdurch ausgeglichen. Nachfolgend werden Überwurfmutter, Schneidring und Anschlusskörper auf das Rohr 5 aufgesteckt, bis der Kragen 41 der in dem Rohr 5 endseitig angeordneten Verstärkungshülse 4 an dem zwischen der ersten Bohrung 11 und der zweiten Bohrung 12 des Anschlusskörpers 1 gebildeten Absatz anliegt. Nachfolgend wird die Überwurfmutter 2 mit Ihrem Innengewinde 31 auf das Außengewinde 14 des Anschlusskörpers 1 aufgeschraubt, wodurch der zwischen Anschlusskörper 1 und Überwurfmutter 2 angeordnete Schneidring 3 in den Klemmkonus 13 des Anschlusskörpers 1 gepresst wird. Hierdurch wird der Schneidring 3 in seinem vorderen Teil verjüngt, wodurch er sich mit seinen Schneiden 31 in den Außenmantel des Rohres 5 einschneidet. Durch die im Verbindungsbereich in dem Rohr 5 angeordnete Verstärkungshülse 4 werden die hierdurch radial auf das Rohr 5 einwirkenden Kräfte zusätzlich aufgenommen, wodurch einer Verformung des dünnwandigen Rohres 5 wirksam entgegengewirkt ist. Dabei erhält die Verstärkungshülse zum einen Stabilität dadurch, dass sich die Seiten des Schlitzes 43 aufeinanderpressen; alternativ wird - bei Vorliegen größerer Toleranzen - die erforderliche Gegenhaltekraft durch die Reibungskräfte zwischen der Außenmantelfläche der Verstärkungshülse 4 und der Innenmantelfläche des Rohres 5 erzeugt.

## Patentansprüche

1. Verstärkungshülse zum Einsatz in einer einen Klemmkonus aufweisenden Anschlussköper, einen Schneidring und eine auf den Anschlusskörper aufschraubbare Überwurfmutter umfassenden Schneidringverschraubung für ein dünnwandiges Rohr, mit einem Hülsenkörper, der endseitig mit einem zumindest bereichsweise umlaufenden Kragen (41) versehen ist und der über seine gesamte Länge durch einem axialen Schlitz (43) durchtrennt ist, wobei der Hülsenkörper derart elastisch ist, dass die Kanten des axialen Schlitzes (43) reversibel aneinanderdrückbar sind und wobei die Breite b_{Schlitz} des axialen Schlitzes (43) sich errechnet zu b_{Schlitz} = D_{Hülse} • 3 % • π, mit D_{Hülse} = Außendurchmesser der Verstärkungshülse.

2. Verstärkungshülse nach Anspruch 1, **dadurch gekennzeichnet, dass** diese aus Messing oder Federstahl hergestellt ist.

3. Verstärkungshülse nach Anspruch 1 oder 2, **dadurch gekennzeichnet, dass** diese an einem Ende einen konusförmigen Endabschnitt (42) aufweist.

4. Schneidringverschraubung, mit einem dünnwandigen Rohr, einem einen Klemmkonus aufweisenden Anschlusskörper, einem Schneidring, einer auf den Anschlusskörper aufschraubbaren Überwurfmutter sowie einer Verstärkungshülse nach einem der Ansprüche 1 bis 3 zum Einbringen in das Rohr, wobei der Außendurchmesser der Verstärkungshülse (4) größer ist, als der Innendurchmesser des Rohres (5), wobei eine Verringerung des Außendurchmessers der Verstärkungshülse (4) auf einen Durchmesser, der kleiner als der Innendurchmesser des Rohres (5) ist, durch Aneinanderdrücken der Kanten des axialen Schlitzes (43) ermöglicht ist.

5. Schneidringverschraubung nach Anspruch 4, **dadurch gekennzeichnet, dass** der Außendurchmesser der Verstärkungshülse wenigstens das 1,02-fache, bevorzugt wenigstens das 1,03-fache, besonders bevorzugt wenigstens das 1,04-fache des Nenn-Innendurchmessers des Rohres beträgt.

6. Rohr mit einer Schneidringverschraubung nach Anspruch 4 oder 5, **dadurch gekennzeichnet, dass** die Verstärkungshülse (4) unter Vorspannung an der Innenwand des Rohres (5) anliegt, wobei der Schneidring(3) an dem Klemmkonus (13) des Anschlusskörpers (1) anliegt und über die Verschraubung von Anschlusskörper (1) und Überwurfmutter (2) derart auf das Rohr (5) gepresst ist, dass dessen Schneiden (31) in die Außenwand des Rohres (5) einschneiden.

7. Verfahren zur Montage einer Schneidringverschraubung nach Anspruch 4 oder 5 an einem dünnwandigen Rohr (5), wobei zunächst stirnseitig eine Verstärkungshülse (4) nach einem der Ansprüche 1 bis 3, deren Außendurchmesser größer als der Rohrinnendurchmesser ist, zusammengedrückt wird, nachfolgend die so vorgespannte außendurchmesserverminderte Verstärkungshülse (4) in das Rohr (5) eingesetzt wird, bis die Stirnseite des Rohres (5) an dem Kragen (41) der Verstärkungshülse (4) anliegt, wobei die Verstärkungshülse (4) entspannt wird, bis deren Außenmantelfläche an der Innenwand des Rohres (5) anliegt, wonach Anschlussstück (1), Schneidring (3) und Überwurfmutter (2) auf das Rohr (5) aufgeschoben und sodann Anschlussstück (1) und Überwurfmutter (2) miteinander verschraubt werden, wobei die axial geschlitzte Verstärkungshülse (4) soweit zusammengedrückt wird, bis die Kanten des axialen Schlitzes (43) aneinanderliegen.

## Claims

1. Reinforcing sleeve for use in a cutting ring screw connection for a thin-walled tube comprising a connection body with a chuck cone, a cutting ring and a cap nut, which can be screwed onto the connection body, with a sleeve body, which is provided at the end with an at least partially circumferential collar (41) and which is separated over its entire length by an axial slot (43), wherein the sleeve body is elastic in such a manner that the edges of the axial slot (43) can be reversibly pressed together and wherein the width bₛₗₒₜ of the axial slot (43) is calculated as bₛₗₒₜ = Dₛₗₑₑᵥₑ · 3 % · π, with Dₛₗₑₑᵥₑ = outer diameter of the reinforcing sleeve.

2. Reinforcing sleeve according to claim 1, **characterised in that** it is made of brass or spring steel.

3. Reinforcing sleeve according to claim 1 or 2, **characterised in that** it has a conical end section (42) on one end.

4. Cutting ring screw connection with a thin-walled tube, a connection body with a chuck cone, a cutting ring, a cap nut, which can be screwed onto the connection body, as well as a reinforcing sleeve according to one of claims 1 to 3 for insertion into the tube, wherein the outer diameter of the reinforcing sleeve (4) is larger than the inner diameter of the tube (5), wherein a reduction in outer diameter of the reinforcing sleeve (4) to a diameter smaller than the inner diameter of the tube (5) is allowed for by pressing together the edges of the axial slot (43).

5. Cutting ring screw connection according to claim 4, **characterised in that** the outer diameter of the reinforcing sleeve is at least 1.02 times, preferably at least 1.03 times, particularly preferably at least 1.04 times that of the nominal inner diameter of the tube.

6. Tube having a cutting ring screw connection according to claim 4 or 5, **characterised in that** the reinforcing sleeve (4) abuts on the inner wall of the tube (5) under prestress, wherein the cutting ring (3) abuts on the chuck cone (13) of the connection body (1) and is pressed onto the tube (5) via the screw connection of connection body (1) and cap nut (2) in such a manner that its cutting edges (31) cut into the outer wall of the tube (5).

7. Method for mounting a cutting ring screw connection according to claim 4 or 5 on a thin-walled tube (5), wherein first, at the end face, a reinforcing sleeve (4) according to one of claims 1 to 3, whose outer diameter is larger than the inner diameter of the tube, is compressed, subsequently, the reinforcing sleeve (4) thus prestressed and reduced in outer diameter is inserted into the tube (5) until the end face of the tube (5) abuts on the collar (41) of the reinforcing sleeve (4), wherein the reinforcing sleeve (4) is expanded until its outer surface abuts on the inner wall of the tube (5), whereupon the connection piece (1), cutting ring (3) and cap nut (2) are pushed onto the tube (5) and the connection piece (1) and cap nut (2) are then screwed together, wherein the axially slotted reinforcing sleeve (4) is compressed to such an extent until the edges of the axial slot (43) rest against one another.

## Revendications

1. Manchon de renfort à mettre en œuvre dans un vissage à bague coupante pour un tube à paroi mince, vissage qui comprend un corps de raccordement avec cône de bridage, une bague coupante et un écrou raccord vissable sur le corps de raccordement, comprenant un corps de manchon muni en son extrémité au moins localement d'un collet périphérique (41) et qui sur toute sa longueur est sectionné par une fente axiale (43), sachant que le corps de manchon est élastique de sorte que les bords de la fente axiale (43) peuvent être poussés de manière réversible l'un contre l'autre et sachant que la largeur b_{fente} de la fente axiale (43) se calcule ainsi : b_{fente} = D_{manchon} • 3 % • π, avec D_{manchon} = diamètre extérieur du manchon de renfort.

2. Manchon de renfort selon la revendication 1, **caractérisé en ce que** ce manchon est réalisé en laiton ou en acier à ressort.

3. Manchon de renfort selon la revendication 1 ou 2, **caractérisé en ce que** ce manchon présente, à une extrémité, un segment terminal (42) de forme conique.

4. Vissage à bague coupante, avec tube à paroi mince, un corps de raccordement présentant un cône de bridage, une bague coupante, un écrou-raccord vissable sur le corps de raccordement ainsi qu'un manchon de renfort selon l'une des revendications 1 à 3, à introduire dans le tube, sachant que le diamètre extérieur du manchon de renfort (4) est supérieur au diamètre intérieur du tube (5), sachant qu'une réduction du diamètre extérieur du manchon de renfort (4) à un diamètre inférieur au diamètre intérieur du tube (5) est rendu possible par une compression l'un contre l'autre des bords de la fente axiale (43).

5. Vissage à bague coupante selon la revendication 4, **caractérisé en ce que** le diamètre extérieur du manchon de renfort représente au moins 1,02 fois, de préférence au moins 1,03 fois et de manière particulièrement préférentielle au moins 1,04 fois le diamètre intérieur nominal du tube.

6. Tube présentant un vissage à bague coupante selon la revendication 4 ou 5, **caractérisé en ce que** le manchon de renfort (4) applique sous précontrainte contre la paroi intérieure du tube (5), sachant que la bague coupante (3) applique contre le cône de bridage (13) du corps de raccordement (1) et est comprimée sur le tube (5), via le raccord vissé du corps de raccordement (1) et de l'écrou-raccord (2) de sorte, que ses tranchants (31) pénètrent dans la paroi extérieure du tube (5) en l'incisant.

7. Procédé de montage d'un vissage à bague coupante selon la revendication 4 ou 5 contre un tube (5) à paroi mince, sachant que dans un premier temps, côté frontal, est comprimé un manchon de renfort (4) selon l'une des revendications 1 à 3, dont le diamètre extérieur est supérieur au diamètre intérieur du tube, qu'ensuite le manchon de renfort (4) ainsi précontraint, d'un diamètre extérieur réduit, est introduit dans le tube (5) jusqu'à ce que la face frontale du tube (5) applique contre le collet (41) du manchon de renfort (4), sachant que le manchon de renfort (4) est détendu jusqu'à ce que sa surface enveloppante externe applique contre la paroi intérieure du tube (5), ce après quoi la pièce de raccordement (1), la bague coupante (3) et l'écrou-raccord (2) sont enfilés sur le tube (5) et qu'ensuite la pièce de raccordement (1) et l'écrou-raccord (2) sont vissés l'un avec l'autre, sachant que le manchon de renfort (4) à fente axiale est comprimé au point que les bords de la fente axiale (43) appliquent l'un contre l'autre.
